# EUROPEAN PATENT APPLICATION

(11) **EP 4 531 308 A1**
(43) Date of publication of application: **02.04.2025**
(21) Application number: 24152047.7
(22) Date of filing: 16.01.2024
(51) Int. Cl.: H04B 17/16, H01P 5/12, H04B 1/38

(54) **APPARATUS AND METHOD FOR TESTING AN RF TRANSCEIVER**

(30) Priority: 27.09.2023 EP 23200231
(71) Applicant: Infineon Technologies AG, 85579 Neubiberg (DE)
(72) Inventor: SCHMIDT, Philipp, 4600 Wels (AT); STARZER, Florian, 4482 Ennsdorf (AT); SCHIMPELSBERGER, Raphael, 4594 Grünburg (AT)
(74) Representative: Infineon Patent Department

(57) **Abstract**

A test apparatus and method of testing a radio frequency (RF) device. An apparatus for testing the RF transceiver comprises a test waveguide structure. The test waveguide structure comprises a body and a hollow waveguide embedded inside the body, wherein the hollow waveguide is formed by metal walls of the body and wherein the hollow waveguide extends through the body for routing the RF signals. The hollow waveguide comprises an input port on a first surface of the body which is configured to receive an RF signal from the RF transceiver. The hollow waveguide further comprises an output port on the first surface and configured to transmit at least a portion of the RF signal wireless to the RF transceiver. A coupler is arranged within the body and is configured to couple a first portion of the RF signal to the output port and a second portion to a test port.

## Description

### TECHNICAL FIELD

The present disclosure relates to the field of Radio frequency (RF) transceivers, in general, and in particular to testing of RF transceivers.

### BACKGROUND

Radio frequency (RF) transceivers having RF wireless transmission structures such as RF launchers or antennas integrated for transmitting and receiving wireless RF signals are used in a variety of applications, for example in wireless communications or radar sensors.

During production, such RF transceivers need to be tested to confirm that they are functional according to the specification or confirm with other requirements. In many applications, RF devices are used in safety critical applications for example in the automotive sector where RF transceivers may be an integral part of advanced driver assistance systems improving safety and comfort of the drivers. Accordingly, it is important to test the RF transceiver during production testing as any deviation from expected performance or even a defect of the RF transceiver may result in a poor performance or malfunctioning when the RF transceiver is operated in the field. On the other hand, production testing should also be cost-efficient as time spend on testing increases the overall cost of the product.

Accordingly, it is an object of the present application to provide a concept for improved testing of an RF transceiver. This object is solved by an apparatus according to claim 1 and a method for testing an RF transceiver according to claim 10.

### SUMMARY

According to an example of the disclosure, an apparatus for testing a radio frequency (RF) transceiver comprises a test waveguide structure. The test wave guide structure comprises a body and a hollow waveguide embedded inside the body, wherein the hollow waveguide is formed by metal walls of the body and wherein the hollow waveguide extends through the body for routing the RF signals. The hollow waveguide comprises an input port on a first surface of the body which is configured to receive an RF signal from the RF transceiver. The hollow waveguide further comprises an output port on the first surface and configured to transmit at least a portion of the RF signal wireless to the RF transceiver. A coupler is arranged within the body and is configured to couple a first portion of the RF signal to the output port and a second portion to a test port.

According to an example of the disclosure, a method for testing an RF transceiver comprises coupling the RF transceiver to the apparatus for testing the RF transceiver and wireless transferring an RF signal from the RF transceiver to the input port of the hollow waveguide. The method further comprises coupling via the coupler a first portion of the RF signal to the output port of the hollow waveguide and wireless transferring the first portion of the RF signal from the output port of the hollow waveguide to the RF transceiver. Further, processing the first portion of the RF signal in the RF transceiver and determining a first test result of the testing based on the processing of the first portion of the RF signal in the RF transceiver.

### BRIEF DESCRIPTION OF THE DRAWINGS

The present disclosure is illustrated by way of example, and not by way of limitation, in the figures of the accompanying drawings in which like reference numerals refer to similar or identical elements. The elements of the drawings are not necessarily to scale relative to each other. The features of the various illustrated examples can be combined unless they exclude each other.
Figure 1 illustrates a block diagram of an example of a test set-up for testing an RF transceiver.
Figure 2 illustrates a block diagram of an example of a test set-up for testing an RF transceiver.
Figure 3 illustrates a block diagram of an alternative example of a test set-up for testing the RF transceiver.
Figure 4A and Figure 4B illustrate a 3D view of a test wave guide structure usable for testing the RF transceiver.
Figure 4C illustrates an example of a waveguide delay line usable in the test waveguide structure of Figure 4A and 4B.
Figure 5 illustrates a cross-sectional view of an apparatus for testing the RF transceiver.
Figure 6 illustrates a block diagram of an example of a test set-up for testing more than one RF transceivers.
Figure 7-illustrates a block diagram of an example of a test set-up for testing more than one RF transceivers simultaneously.

### DETAILED DESCRIPTION

In the following description, directional terminology, such as "top", "bottom", "upper", "lower" "front", "back" etc., is used with reference to the orientation of figures being described. The components of the disclosure can be positioned in a number of different orientations, the directional terminology is used for purposes of illustration and is in no way limiting.

Furthermore, to the extent that the terms "include", "have", "with" or other variants thereof are used in either the detailed description or the claims, such terms are intended to be inclusive in a manner similar to the term "comprise". The terms "coupled" and "connected", along with derivatives thereof may be used. It should be understood that these terms may be used to indicate that two elements co-operate or interact with each other regardless of whether they are in direct physical or electrical contact, or they are not in direct contact with each other; intervening elements or layers may be provided between the "bonded", "attached", or "connected" elements.

Embodiments described herein provide a new concept for testing RF transceivers in particular during production testing (fabrication testing). Today, industry is seeking for cost-effective solutions implementing wireless RF transceivers. RF transceivers need to have wireless transfer elements such as antennas or launchers designed for the frequency the device is working with. Integrating the wireless transfer elements into the chip or into the chip package relieves the end customer from designing wireless transfer elements and testing the interface of the sensor. However, for manufacturer of the silicon chip the testing of the RF transceivers during production testing provides a new challenge as the silicon chip devices need to be tested to provide evidence that the shipped device including the wireless transfer elements is working properly. Furthermore, the evidence of function in production testing needs to be obtained with a limited number of qualitative measures due to time and cost reasons.

The embodiments described herein allow improved testing of an RF transceiver with integrated wireless transfer structures (such as launchers, antennas etc.) without the need of directly tapping the RF signals from RF output ports of the RF transceiver. As will be described further below, a hollow metallized waveguide is provided in a body (such as a block made of metal or plastic) of a test set-up. The hollow waveguide provides a continuous wireless transfer of at least a portion of an RF signal coupled from the RF transceiver into an input port and to an output port of the hollow waveguide. At the output port of the hollow waveguide at least a portion of the RF signal is transferred back to the RF transceiver such that the RF signal is transferred through the hollow waveguide completely inside the body. In other words, the RF signal transferred back to the RF transceiver does not leave the body after the RF signal is coupled into the hollow waveguide. In view of this, cross-coupling of the RF signals from the input port to the output port is minimized as the RF signals travel completely within the hollow waveguide. Furthermore, one or more specific RF elements such as a passive coupler are provided in the hollow waveguide in order to provide a portion of the RF signal to dedicated test ports. The overall concept thereby achieves an effective and time-efficient testing as will be described later.

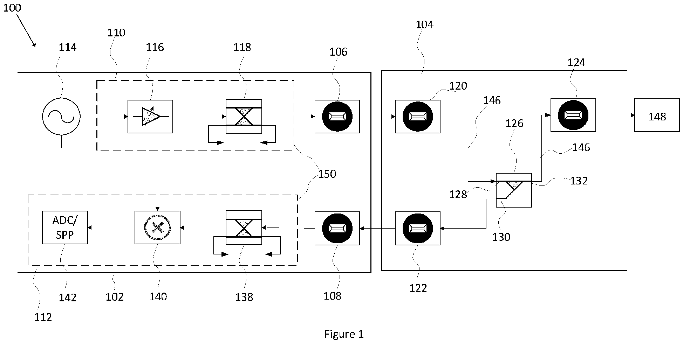

Referring now to Figure 1, a block diagram of a test set-up 100 for testing an RF transceiver 102 is shown. The test set-up 100 has a test waveguide structure 104 which is detachably coupled during the production testing to the RF transceiver 102 to be tested, sometimes also referred to as a device under test (DUT). The test set-up 100 may for example be used during a production testing of the RF transceiver 102. The test waveguide structure 104 can also be considered as a distribution waveguide structure to distribute the test signals generated within the RF transceiver 102 to various ports as will be described below.

The RF transceiver 102 has a first wireless transfer element 106 such as an integrated launcher or an integrated antenna which is during the production testing wireless coupled with an input port 120 of a hollow waveguide 146 of the test waveguide structure 104. The RF transceiver 102 further includes a local oscillator 114 to generate an RF signal. The local oscillator 114 is coupled to a transmit channel 110 to process the RF signal. An output of the transmit channel 110 is coupled to an input of the first wireless transfer element 106.

The RF transceiver 102 further includes a second wireless transfer element 108 coupled with a receive channel 112. The second wireless transfer element 108 may be a receive antenna or a receive launcher. As shown in Figure 1, the second wireless transfer element 108 is wireless coupled to an output port 122 of the hollow waveguide 146 during the production testing. In some examples, the first wireless transfer element 106 and the second wireless transfer element 108 may be antennas integrated in the RF transceiver 102 and are configured to transfer RF signals during in-field operation of the RF transceiver 102 directly to the surrounding or receive RF signals from the surrounding. In some examples, the first wireless transfer element 106 and the second wireless transfer element 108 may be launchers integrated in the RF transceiver 102 and configured to wireless transfer RF signals during in-the field operation to a transmit antenna or receive RF signals from a receive antenna which are mounted to the RF transceiver 102 after the production testing.

The transmit channel 110 and the receive channel 112 may be referred as an RF circuit 150. The RF transceiver 102 including the RF circuit 150 is usually referred to as monolithic microwave integrated circuit (MMIC), which may include a chip package suitable for RF applications. For example, the MMIC may be packaged in an enhanced Wafer Level Ball Grid Array (eWLB) package. It is understood that other types of chip packages are also applicable.

In some examples, the transmit channel 110 may include an amplifier 116 and a first coupler 118 between the first wireless transfer element 106 and the local oscillator 114. Before transmitting the RF signal to the first wireless transfer element 106, the RF signal may be amplified by the amplifier 116. The first coupler 118 may be provided for monitoring and calibrating the transmit channel 110 of the RF transceiver 102 by coupling out a fraction of the RF signal and providing the RF signal to a monitoring or calibration circuit. In some applications, the RF transceiver 102 may be an automotive radar transceiver with the RF signal being in a SHF (Super High Frequency) or an EHF (Extremely High Frequency) band, e.g., between 76 GHz and 81 GHz.

In some examples, the transmit channel 110 may have a modulator between the amplifier 116 and the first coupler 118. The modulator modulates a frequency, amplitude, or a phase of the RF signal i.e., adds or subtracts an offset frequency to the RF signal.

As described above, in the production testing, the first wireless transfer element 106 and the second wireless transfer element 108 of the RF transceiver 102 are detachably coupled with the test waveguide structure 104 to transmit the RF signal from the transmit channel 110 of the RF transceiver 102 to the test waveguide structure 104 and from the test waveguide structure 104 back to the RF transceiver 102. Detachably coupling the RF transceiver 102 may for example include clipping the RF transceiver 102 to a test socket having a plurality of pins (such as pogo pins) to electrically connect electrical contacts of the RF transceiver 102 with a power source or processing circuitry to make the RF transceiver 102 operable and allow reading of data from the RF transceiver 102. In some examples, instead of manually clipping, the RF transceiver 102 may be automatically placed by an automated handler (robot handler) on the test socket. The test socket is mounted to the test waveguide structure 104 for distributing the RF signals as will be described below.

A coupler 126 is provided in the hollow waveguide 146 to distribute the RF signal from the input port 120 to the output port 122 and a test port 124. To this end, an input 128 of the coupler 126 is coupled to the input port 120 via a first section of the hollow waveguide 146, a first output 130 of the coupler 126 is coupled to the output port 122 and a second output 132 of the coupler 126 is coupled to the test port 124.

The input 128 of the coupler 126 receives the RF signal from the input port 120 of the hollow waveguide 146. The RF signal is divided into a first portion (first fraction of power) and a second portion (second fraction of power) which are output at the first output 130 and the second output 132 of the coupler 126, respectively. The coupler 126 couples the first portion of the RF signal to the output port 122 of the hollow waveguide 146 via the first output 130 of the coupler 126. Similarly, the coupler 126 further couples the second portion of the RF signal to the test port 124 of the hollow waveguide 146 via the second output 132 of the coupler 126.

The coupler 126 is a passive coupler and may for example be a directional coupler, a ring coupler, a rat-race coupler, a branch-line coupler, a Lange coupler or a Wilkinson divider. A power level of the first portion of the RF signal may depend on geometrical distances of structures such as arms or ring sections provided in the coupler 126 in relation to the wavelength of the RF signal.

During production testing, the test port 124 of the hollow waveguide 146 is coupled with a measuring device 148. The measuring device 148 may be formed internal or external to the test waveguide structure 104. The measuring device 148 may be a power detector or a power sensor to measure a power of the second portion of the RF signal. The power detector may be integrated in the hollow waveguide 146 or an external device coupled to an external coupling port. In case, the hollow waveguide 146 is coupled to an external coupling port, a standard mechanical connection structure may be provided to provide a standard waveguide connection for example by screwing an external waveguide to the standard mechanical structure.

The power level measured by the power detector allows determining the fraction of the RF signal that is actually coupled from the RF transceiver 102 into the test waveguide structure 104. As the coupling factor changes for each RF transceiver mounted and tested, accurate information on the coupling or coupling factor between the RF transceiver 102 and the test waveguide structure 104 provides an improved and more accurate testing. The measured power level of the second portion of the RF signal may be compared against or set in relation to a power level measured by a power detector or power sensor provided in the RF transceiver 102 which may receive a portion of the RF signal via coupler 118. This comparison allows to detect any problem or malfunction which may occur for example in the coupling from the transmit channel 110 to the first wireless transfer element 106.

In some examples, the measuring device 148 may be a spectrum analyzer device coupled external to the test waveguide structure 104 to measure in addition to the power also information such as a frequency or a phase of the second portion of the RF signal and compare against a frequency or a phase of a determined signal. This allows more detailed information on the characteristic of the RF signal generation and processing in the transmit channel 110 of the RF transceiver 102 and in general a more accurate production testing.

In one example, the measuring device 148 may be a diode integrated into the hollow waveguide 146 indicating a power level of the second portion of the RF signal received at the test port 124 of the hollow waveguide 146. The hollow waveguide 146 may have an RF test signal source to provide signals of defined parameters. For example, the output signals of the RF test signal source may have a pre-determined power level, which may be used to calibrate the diode, e.g. during production testing. Measuring at least one of the power, frequency or phase of the second portion of the RF signal at the test port 124 constitute a second test result which may be compared with results obtained by the receive channel 112 of the RF transceiver 102.

The output port 122 of the hollow waveguide 146 transmits the first portion of the RF signal to the second wireless transfer element 108 of the RF transceiver 102. In other words, a portion of the RF signal, i.e., the first portion, is guided back to the RF transceiver 102. The second wireless transfer element 108 is coupled with a receive channel 112 which includes a mixer 140, optionally a second coupler 138 and a signal processing unit 142. The second wireless transfer element 108 transmits the first portion of the RF signal to the signal processing unit 142 via the mixer 140. The second coupler 138 may be used for injecting test signals into the receive channel 112 to allow an internal testing of monitoring of the receive channel 112 of RF transceiver 102.

The mixer 140 is configured to receive the RF signal from the local oscillator 114 at an input and to down convert the first portion of the RF signal into a baseband signal (sometimes referred to as intermediate frequency signal). The baseband signal is further processed by the signal processing unit 142 having an analog baseband signal processing chain and an analog to digital converter. The analog baseband signal processing chain may include one or more filters to remove undesired side bands and image frequencies. The filtered baseband signal is supplied to an analog-to-digital converter to digitize the baseband signal for further processing in a digital domain. The processing of the received RF signal allows determining characteristics of the received RF signal. For example, the digital processing may include a Fourier-transformation of the received signal allowing obtaining power, phase, phase noise or spectral information of the received signal and constitutes a first test result. The first test result may be compared in one example to the measurement values provided by the measuring device 148 i.e. the second test result.

In other words, by measuring characteristics such as power, frequency or phase of the first portion of the RF signal at the signal processing block 142, the performance of the receive channel 112 of the RF transceiver 102 can be evaluated. In case the second test results provided by the measuring device 148 deviate from the first test results obtained from the processing block 142, a warning signal may be generated indicating potential problems or potential failures of the RF transceiver 102.

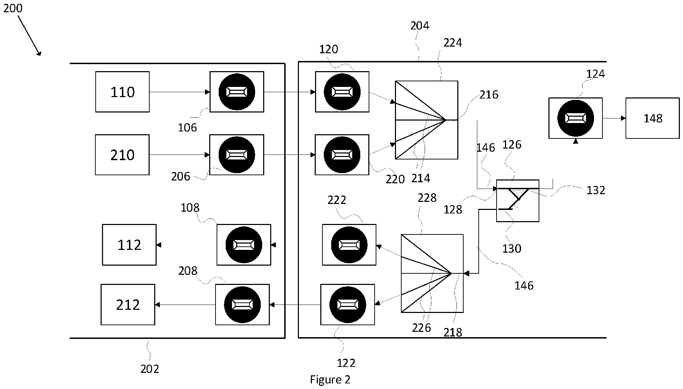

Referring now to Figure 2, a block diagram of a test set-up 200 for testing an RF transceiver 202 is shown. The test set-up 200 may include some or all features of the test set-up 100 of Figure 1 and will be described in regards of differences only. Distinguished from the example of Figure 1, the test set-up 200 of Figure 2 is used to test an RF transceiver 202 having a plurality of transmit channels and a plurality of receive channels. Figure 2 shows two transmit channels 110, 210 and two receive channels 112, 212 but any number of transmit channels and receive channels may be implemented. Accordingly, the RF transceiver 202 may have at least one additional first wireless transfer element 206 and at least one additional second wireless transfer element 208. In other words, the RF transceiver 202 may have a plurality of first wireless transfer elements 106, 206 and a plurality of second wireless transfer elements 108, 208. Each of the plurality of first wireless transfer elements 106, 206 is coupled with a respective transmit channel of a plurality of receive channels 110, 210 of the RF transceiver 202. Furthermore, each of the plurality of second wireless transfer elements 108, 208 is coupled with a respective receive channel of a plurality of receive channels 112, 212 of the RF transceiver 202.

Furthermore, according to one example, the hollow waveguide 146 comprises a plurality of input ports 120, 220 for coupling to the plurality of first wireless transfer elements 106, 206 and a plurality of output port 122, 222 for coupling to the plurality of second wireless transfer elements 108, 208. A combiner 224 may be arranged in the hollow waveguide 146 between the input 128 of the coupler 126 and the plurality of input ports 120, 220. The combiner 224 has a plurality of inputs 214 and an output 216. The plurality of inputs 214 of the combiner 224 in Figure 2 constitute five inputs, however for simplicity coupling between two inputs 214 of the combiner 224 and two input ports 120, 220 of the hollow waveguide structure 146 is illustrated. In particular, each input of the plurality of inputs 214 of the combiner 224 is coupled via the hollow waveguide 146 to the respective input port of the plurality of input ports 120, 220 and an output 216 of the combiner 224 is coupled with the input 128 of the coupler 126.

Similarly, a splitter 228 may be arranged between the second output 130 of the coupler 126 and the plurality of output ports 122, 222. The splitter 228 has an input 218 and a plurality of outputs 226. The plurality of outputs 226 of the splitter 228 in Figure 2 constitute five outputs, however for simplicity coupling between two outputs 226 of the splitter 228 and two output ports 122, 222 of the hollow waveguide 146 is illustrated. In particular, each output of the plurality of outputs 226 of the splitter 228 is coupled via the hollow waveguide 146 to the respective output port of the plurality of output ports 122, 222 and the input 218 of the splitter 228 is coupled via the hollow waveguide 146 to the output 130 of the coupler 126.

During the production testing, one of the transmit channels of the plurality of transmit channels 110, 210 may be activated to transmit the RF signal to the corresponding input port 120 or 220 of the hollow waveguide 146 while the other transmit channels 110 or 210 are deactivated. Via the combiner 224 the RF signal is transferred to the coupler 126 and the second portion of the RF signal is distributed to the measuring device 148 as described above. The first portion of the RF signal is distributed to the splitter 228 which splits the first portion of the RF signals into a plurality of RF signals corresponding to the first RF signal (replicas). The plurality of RF signals is transferred to the plurality of output ports 122, 222 so that the replicas of the first portion of the RF signal are simultaneously transmitted to the plurality of receive channels 112, 212.

This allows an effective production testing since all of the plurality of second transfer elements 108, 208 can be tested simultaneously while one of the transmit channels 110, 210 is activated. In order to test all of the plurality of transmit channel 110, 210 each of the transmit channels need to be activated for transmitting the RF signal as described above.

The RF transceiver 102, 202 may be any type of transceiver such as radar transceiver, wireless communication transceiver etc. The RF transceiver may be configured to transmit during the production testing a continuous wave signal of fixed frequency or frequency modulated continuous wave signals (FMCW signals).

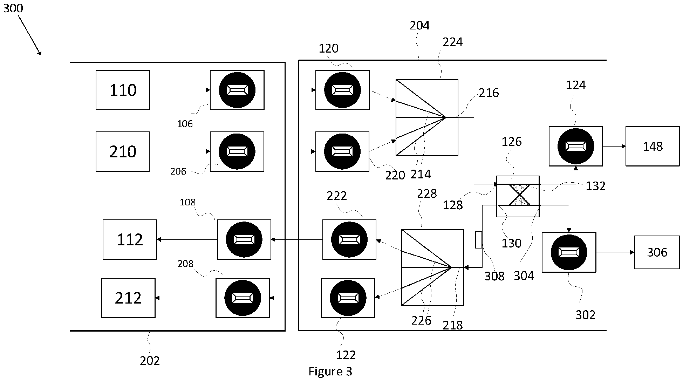

Figure 3 shows an example of a block diagram of an alternative test set-up 300 which may include some or all features of the test set-up 200 of Figure 2. The test-setup 300 is characterized by an additional port 302 of the hollow waveguide 146 which is coupled with a third output 304 of the coupler 126. The third output 304 of the coupler 126 is an isolation port of the coupler 126. In some examples, a third portion of the RF signal may be coupled to the additional port 302 of hollow waveguide 146 via the third output 304 of the coupler 126.

In some examples, the additional port 302 may be a termination port of the hollow waveguide 146 to provide a termination using a structure such as a wedge shaped element or a specific medium to provide matched termination impedances, for example in a range of 40 Ohm to 90 Ohm. Using the additional port 302 provides an improved isolation between the outputs 130, 132, 304 and input 128 of the coupler 126.

In some examples the additional port 302 may be configured as a reflecting port configured to reflect the RF signals back towards the coupler 126.

In some examples, the additional port 302 of the hollow waveguide 146 may be coupled with a measuring device 306. The measuring device 306 may be similar to the measuring device 148 of Figure 2. The measuring device 306 may be a power detector or a power sensor configured to measure a power of the third portion of the RF signal or a spectrum analysis device configured to measure a frequency or a phase of the third portion of the RF signal. The measurements of the power or frequency or phase of the third portion of the RF signal at the additional port 302 may allow to obtain additional information of the RF signal generated by the RF transceiver 202 and on the second portion of the RF signal transferred back to the RF transceiver 202 which may improve the determining whether the RF transceiver 202 is operating correctly.

In some examples, the additional port 302 may be coupled to an external RF source capable of providing a defined RF test signal as input to the coupler 146. The defined RF test signal is partially transferred via the coupler 126 and the output port 122, 222 to the receive channel 112, 212 of the RF transceiver 202. In other words, the receive channel 112, 212 receives the first portion of the RF signal and the RF test signal which is processed in the receive channel 112, 212 as described earlier. This provides information on the power, phase, noise and quality of the first portion of the RF signal.

Overall, the provision of the additional port 302 may allow to implement the termination port increasing the accuracy of the testing or may allow to couple to external devices such as an external measurement device or an external RF signal source to improve the testing capabilities.

In some examples, the output 130 of the coupler 126 may also be coupled to a waveguide delay line 308 arranged between the coupler 126 and the splitter 228. In case, there is no splitter the waveguide delay line 308 is arranged between the output 130 of the coupler 126 and the output ports 122, 222. The waveguide delay line 308 may each have a predetermined length and may optionally also contain specific material to change the group delay of the RF signal. Delaying the RF signals may allow simulating that the RF signal travelled a specific distance. In case the RF transceiver 202 is implemented as a radar transceiver such as a FMCW radar transceiver, the receive channel 112, 212 receives the version of the RF signal with a time delay due to the waveguide delay line 308. Processing of the received signal may then determine a phase shift between the LO signal and the received signal or a corresponding radar target distance for example by Fourier transforming the baseband signal. The information resulting from the processing in the receive channel 112, 212 may be compared to the predetermined delay introduced by the waveguide delay line 308 in order to verify correct operation of the RF transceiver 202. In other words, the waveguide delay line 308 may simulate an object at a specific distance which may then be detected by the FMCW radar transceiver.

In some examples, a further waveguide delay line may be arranged between the input 128 of the coupler 126 and the input ports 120, 220 or more specifically between the input 128 of the coupler and the output 216 of the combiner 224. In case, there is no combiner the further waveguide delay line is arranged between the input 128 of the coupler 126 and the input ports 120, 220. The test waveguide structure 204 may have either or both waveguide delay line 308 and the further waveguide delay line.

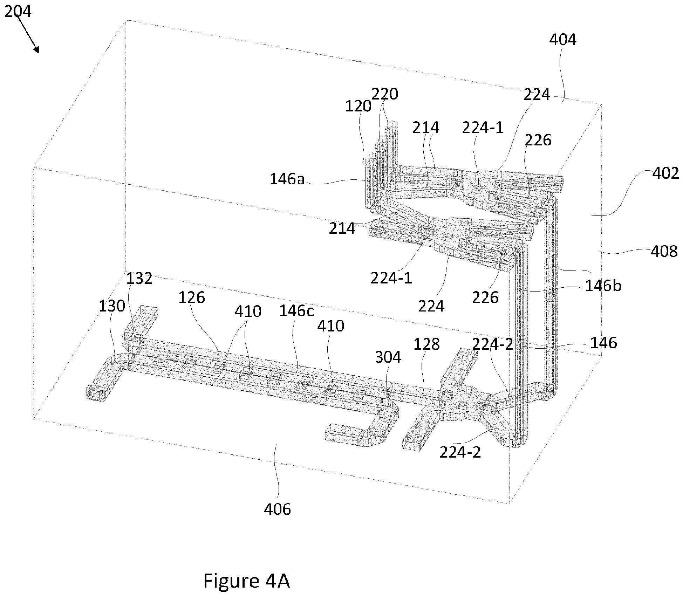

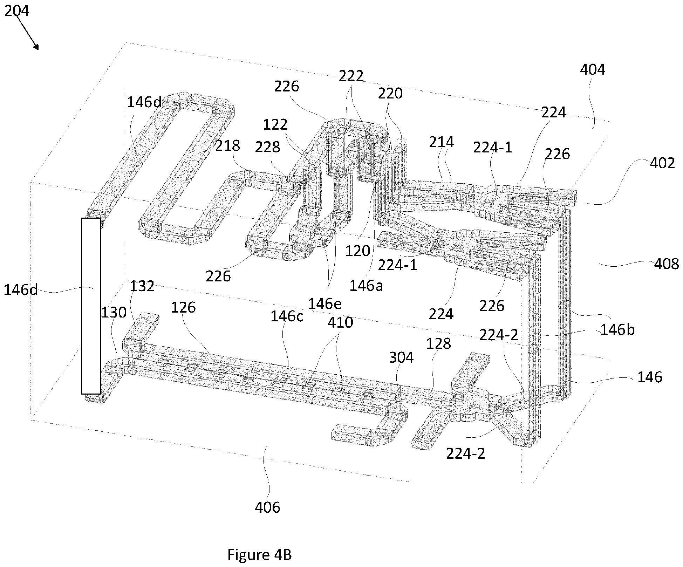

Figures 4A and 4B show a 3D view of a section of the test waveguide structure 204 usable for testing an RF transceiver with three first wireless transfer elements and four second wireless transfer elements. However, numbers of the first and the second wireless transfer elements may be arbitrary. In particular, Figure 4A illustrates coupling between the plurality of input ports 120, 220 of the hollow waveguide 146 and the coupler 126 and Figure 4B further illustrates coupling between the coupler 126 and the plurality of output ports 122, 222 of the hollow waveguide 146. The test waveguide structure 204 has a body 402 made of a metal for e.g., aluminum. In some embodiments, the body 402 may be formed by plastic material followed by a metallization process to form metal surfaces of the hollow waveguide 146. The body 402 has a first surface 404, a second surface 406 opposite to the first surface 404 and side walls 408 connecting the first surface 404 and the second surface 406. The first surface 404 may be a first main surface and the second surface 406 may be a second main surface. A vertical direction and a lateral direction are referred to a direction vertical and lateral with respect to the first surface 404 of the body 402 respectively.

The hollow waveguide 146 is formed inside the body 402 by the inner metal walls of the body 402. The plurality of input ports 120, 220 and plurality of output ports 122, 222 of the hollow waveguide 146 are formed on the first surface 404 of the body 402 and further the test port and optionally, the additional port formed on the second surface 406 of the body 402 (not explicitly shown in Figures 4A and 4B). Optionally, the test port and the additional port may also be formed on the side walls 408 or on the first surface 404 of the body 402. The test waveguide structure 204 has the coupler 126, splitter 228 and combiner 224 formed inside the hollow waveguide 146 i.e., the body 402 of the test waveguide structure 204 comprising the hollow waveguide 146 is a single piece.

As shown in Figure 4A, the plurality of input ports 120, 220 are coupled via first sections 146a of the hollow waveguide 146 wherein the first sections 146a of the hollow waveguide 146 extends in the vertical direction towards the second surface 406 of the body 402. The combiner 224 is formed by first combiner elements 224-1 and a second combiner element 224-2. The first section 146a of the hollow waveguide 146 is coupled with the inputs 214 of the first combiner elements 224-1, wherein the combiner element 224-1 extends in the lateral direction. An interface of the hollow waveguide 146 between the first section 146a of the hollow waveguide 146 and the inputs 214 of the combiner 224 may be tapered to transmit the RF signal. Each input 214 of each combiner element 224-1 is coupled with the respective input port of the plurality of input ports 120, 220 of the hollow waveguide 146 via the first sections 146a of the hollow waveguide 146. As illustrated in Figure 4A, the plurality of input ports 120, 220 comprises three input ports wherein two input ports are coupled with one of the combiner elements 224-1 and the one input port is coupled with the respective other combiner element 224-1.

The output 226 of each combiner element 224-1 is coupled with the respective inputs of inputs of the second combiner element 224-2 via second sections 146b of the hollow waveguide 146. The second combiner element 224-2 combines the two sections 146b of the hollow waveguide 146 to one output which is directly coupled to the input 128 of the coupler 126. The second sections 146b of the hollow waveguide 146 extend in the vertical direction between the first surface 404 and the second surface 406 of the body 402. In particular, the second sections 146b of the hollow waveguide 146 extend close to one of the sidewalls 408 of the body 402. An interface of the hollow waveguide 146 between the second section 146b of the hollow waveguide 146 and the outputs 226 of the combiner elements 224-1, 224-2 may be tapered to transmit the RF signal. Similarly, an interface of the hollow waveguide 146 between the second section 146b of the hollow waveguide 146 and the inputs 128 of the coupler 126 may also be tapered.

A third section 146c of the hollow waveguide 146 extending in the horizontal direction close to the second surface 406 of the body 402 forms the main part of the coupler 126 which is further coupled with the outputs 130, 132, 304 of the coupler 126. The outputs 130, 132, 304 of the coupler 126 are further coupled with the output ports 122, 222, test port 124 and the additional port 304 of the hollow waveguide 146 via the hollow waveguide 146 (not shown explicitly in the Figure 4A). The main part of the coupler 126 has apertures 410 configured to couple the RF signal into the first portion, the second portion and optionally into the third portion which is transferred to the respective ports 122, 222, 124, 302 of the hollow waveguide 146 via the outputs 130, 132, 304 of the coupler 126 as described earlier.

As shown in Figure 4B, the output 130 of the coupler 126 is coupled to the input 218 of the splitter 228 via a fourth section 146d of the hollow waveguide 146. The splitter 228 is formed adjacent to the combiner 224 but may be formed anywhere else inside the body 402. The fourth section 146d of the hollow waveguide 146 extends in the vertical direction towards the first surface 404 of the body 402 and bends in the horizontal direction to provide a delay element prior to the coupling with the input 218 of the splitter 228. The splitter 228 has outputs 226 coupled with the respective output port of the plurality of output ports 122, 222 of the hollow waveguide 146 via a fifth section 146e of the hollow waveguide 146. The fifth section 146e of the hollow waveguide 146 extends in the vertical direction towards the first surface 404 of the body 402 coupling the plurality of output ports 222 to the respective outputs 226 of the splitter 228. An interface of the hollow waveguide 146 between the fifth section 146e of the hollow waveguide 146 and the outputs 226 of the splitter 228 may be tapered to transmit the RF signal.

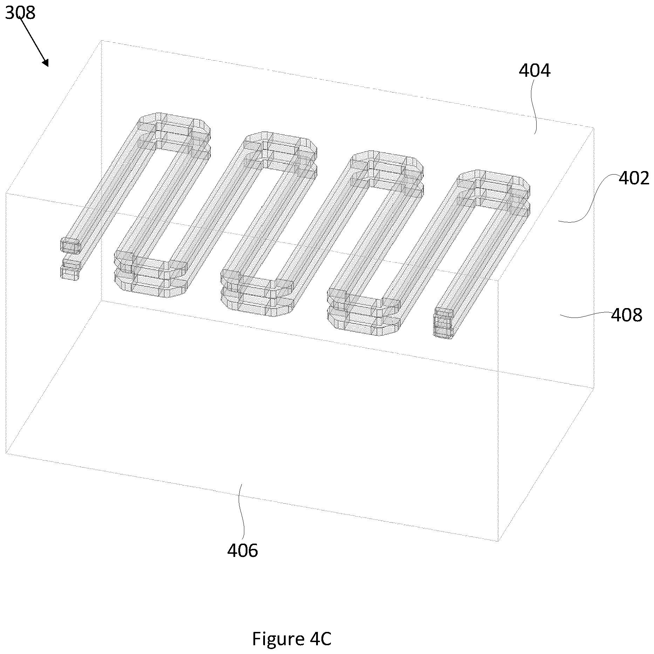

Figure 4C illustrates an example of waveguide delay line 308 inside the body 402 which may be implemented for example between the output 130 of the coupler 126 and the input 218 of the splitter 228. It can be observed that the delay line is implemented in a meandering shape on multiple levels (planes) which are connected by vertical sections of the hollow waveguide 146 (not shown in Figure 4C).

It is to be noted that the multi-layer arrangement of the hollow waveguide extending on multiple levels which are connected by vertical sections enables a very compact implementation of a delay line which is required for the automatic production testing. In some examples the test waveguide structure (i.e. the block in which the waveguide 146 is formed) can be less than 3 cm x 5 cm.

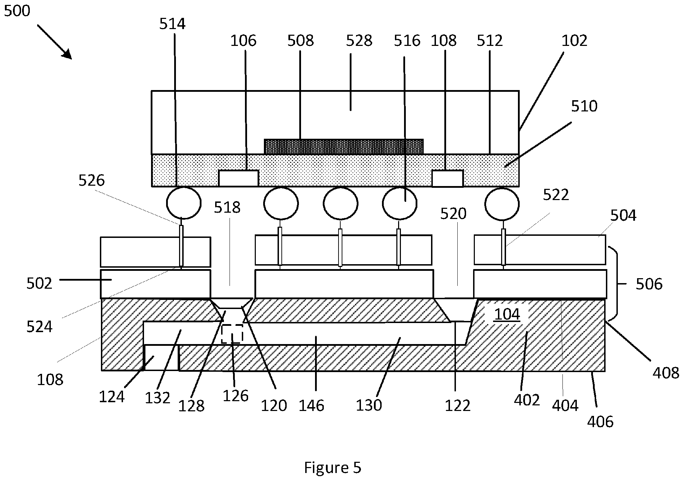

Figure 5 shows an example of a cross-section of a test set-up 500. For simplicity, the RF transceiver 102 and the test waveguide structure 104 are used and the waveguide delay line in the test waveguide structure is omitted. However, it is understood that RF transceiver 202 and the test waveguide structure 204 may also be used. The test waveguide structure 104 is coupled with the RF transceiver 102 via a printed circuit board 502 and a socket 504. The test waveguide structure 104, the printed circuit board 502 and the socket 504 are arranged in a stack 506. The printed circuit board 502 is sandwiched between the first surface 404 of the body 402 of the test waveguide structure 104 and the socket 504. The printed circuit board 502 and the socket 504 has a first through hole 518 aligned with the input port 120 of the hollow waveguide structure 104 and a second through hole 520 aligned with the output port 122 of the hollow waveguide structure 146. As shown, the input port 120 and the output port 122 of the hollow waveguide 146 are on the first surface 404 of the body 402 of the test waveguide structure 104 facing the first wireless transfer element 106 and the second wireless transfer element 108 of the RF transceiver 102 respectively. The test port 124 is on the second surface 406 of the body 402 of the test waveguide structure 104. The coupler 126 is arranged inside the hollow waveguide 146 in the vicinity of the input port 120.

In the present example, the RF transceiver 102 is packaged in a chip package that is referred to as an enhanced Wafer Level Ball Grid Array (eWLB) package. The RF transceiver 102 has a semiconductor die 508 on which at least one transmit channel and at least one receive channel are formed. The semiconductor die 508 is arranged on a top side 512 of a redistribution layer 510. An electrical contact is established between the semiconductor die 508 and electrically conductive structures of the redistribution layer 510. The first wireless transfer element 106 and the second wireless transfer element 108 are formed on a bottom side 514 of the redistribution layer 510 opposite to the top side 512. The redistribution layer 510 couples the first wireless transfer element 106 and the second wireless transfer element 108 with the semiconductor die 508 through the electrically conductive structures. This allows the transmission of the RF signals from the semiconductor die 508 to the wireless transfer element 106, 108 and/or vice-versa. A plurality of solder balls 516 is arranged on the bottom side 514 of the redistribution layer 510. Accordingly, the redistribution layer 510 establishes the electrical connection between the plurality of solder balls 516 and the semiconductor die 508. The plurality of solder balls 516 further electrically connects the RF transceiver 102 with other components attached to or connected to the printed circuit board 502. However other examples may include other configurations and arrangements of the wireless transfer elements 106 and 108. For example, the wireless transfer elements 106 and 108 may be arranged on a separate substrate which is mechanically connected to a semiconductor die 508 including the RF circuitry.

Optionally, the semiconductor die 508 and parts of the redistribution layer 510 and the wireless transfer elements 106 and 108 are encapsulated by an encapsulation material 528. The encapsulation material 528 may be epoxy, filled epoxy, glass fiber filled epoxy, thermoset polymers, thermoplastic polymers, or elastomer polymers.

The socket 504 has plurality of contact pins 522 protruding out from two opposing sides of the socket 504. The contact pins 522 may be pogo-pins configured to detachably attach the RF transceiver 104 to the stack 506. A first end 524 of the contact pins 522 is coupled with the printed circuit board 502. A second end 526 of the contact pins 522 opposite to the first end 524 is coupled with the plurality of solder balls 516 of the RF transceiver 102.

With the introduction of the waveguide structure 104, 204 in the test set-up 100, 200, 300, a new concept which allows an efficient, configurable concept for testing RF transceivers 102, 202 with integrated wireless transfer elements has been introduced. The RF signal generated by the RF transceivers can be transmitted to the waveguide structure without any need of dielectric medium for isolation or impedance matching. The waveguide structure connected to measuring devices allows via an integrated coupler to feed at least a portion of the RF signal back to the RF transceiver such that the RF signal travels completely inside the waveguide structure and also to measure at least one characteristic of the RF signal such as a power completely inside the hollow waveguide. This provides an improved evaluation of the performance of the RF transceiver. The RF signal transmitted by the RF transceiver can be evaluated to detect a performance of the transmit channel while simultaneously transmitting a portion of the RF signal back to the RF transceiver allows to evaluate a performance of the receive channel. In addition, a splitter and combiner may be integrated into the hollow waveguide allowing an efficient testing of multiple receive channels or transmit channels such that one RF signal can be used to evaluate a performance of multiple receive channels of the RF transceiver. Additionally, the concept can be used for single-chip RF transceivers or multi-chip RF transceivers in which multiple semiconductor chips are arranged above or lateral to each other within a RF transceiver.

The following examples are directed to a test setup in which multiple separate RF transceivers implemented on separate RF chips can be tested concurrently. To this end at least two RF transceivers implemented on separate semiconductor chips are detachably coupled to test waveguide structures. The concurrent coupling of multiple RF transceiver allows exchanging RF signals from one of the RF transceivers to the other of the RF transceivers via hollow waveguides, and to utilize the signal from one semiconductor die for testing in the other semiconductor die.

The test setup for multiple separate RF transceivers allows many new testing possibilities that are not available when only a single RF transceiver implemented on a single chip is coupled for testing. Examples disclosed below allow testing possibilities during production testing or component verification which have not been available so far by utilizing signals from the other RF transceiver implemented on a separate semiconductor chip. Examples can address the need for testing a multitude of chips in parallel operation. In some examples the multitude of chips can be configured in a specific configuration similar to an end-field application such as in a cascaded system to form a MIMO system of extended transmit or receive channels in which one chip is a primary chip and one or more are secondary chips synchronized to the primary chip or a cascaded system in a daisy chain configuration. Testing of phase stability and/or power stability of cascaded devices over wider areas which are similar to PCB application spaces or distances and RF channel distribution can be achieved. Further testing possibilities include testing of robustness against interference, as well as testing on suppression of undesired signals, e.g. to meet electromagnetic compatibility (EMC) requirements or testing to meet requirements of the data sheet or product specification.

Furthermore, testing of immunity against other applications using a same or similar frequency operation range (e.g. mobile communication immunity against radar signals) can be achieved in some examples.

In the following, examples of test setups are described which can be used to implement one or more of the testing possibilities described above. Details on one example the testing a bandpass filter in the receive channel of the RF transceivers will be described which can be achieved by combining RF signals from more than one RF transceiver 102, 602 and form a combined RF signal. The combined RF signal may be processed in the receive channel 112 of the RF transceiver 102, 602 and thus used to test the operation of the bandpass filter in the respective RF transceiver 102, 602 during production testing. Skilled persons will be able to derive other testing possibilities as outlined above from this example.

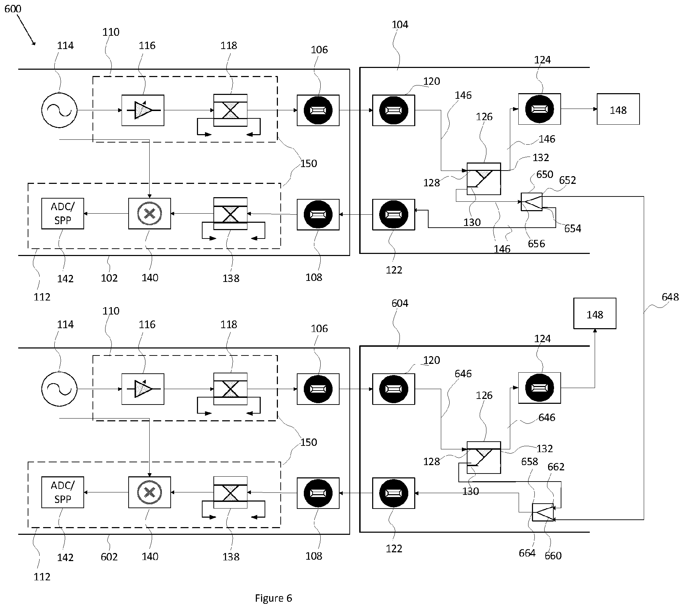

Referring now to Figure 6, a block diagram of a test set-up 600 for testing RF transceivers is shown. One example of testing provided by the test set-up 600 includes the testing of a bandpass filter of the RF transceiver. The test set-up 600 may include some or all features of any of the previous test set-ups 100, 200, 300. A further RF transceiver 602 is detachably coupled with a further test waveguide structure 604 associated with the further RF transceiver 602. The RF transceiver 602 is coupled with the test waveguide structure 604 in a same manner as the RF transceiver 102 is coupled with the test waveguide structure 104 as described in Figure 1. The test waveguide structures 104, 604 are coupled to each other by a connecting hollow waveguide 648 which will be discussed later. The RF signal from the RF transceiver 102 will be referred in the following as a first RF signal. The RF transceiver 602 generates an RF signal which will be referred in the following as a second RF signal. The hollow waveguide 146 of the test waveguide structure 104 will be referred in the following as a first hollow waveguide 146 and a hollow waveguide of the test waveguide structure 604 will be referred as a second hollow waveguide 646. The RF transceivers 102, 602 are two separate transceivers implemented on two different RF semiconductor chips either in one package or in two different semiconductor packages.

For simplicity, each of the RF transceivers 102, 602 is shown to have one first wireless transfer element 106 and one second wireless transfer element 108. For illustration of the test set-up 600, for each of the RF transceivers 102, 602 a respective test waveguide structure 104, 604 having a hollow waveguide 146, 646 and one input port 120 and one output port 122 is illustrated. However, it is understood that other types of RF transceivers, test waveguide structures and hollow waveguides, such as the RF transceiver 202 and the test waveguide structure 204 shown in Figure 2, are also suitable for the test set-up 600.

The RF transceivers 102, 602 may be synchronized with each other such that an RF signal generated by the local oscillator 114 of RF transceiver 102 may be distributed to the other RF transceiver(s) 602 and used therein for synchronizing LO signals in each RF transceiver. In other words, the testing of the RF transceivers 102, 602 may be achieved in a cascade manner and can be tested in the cascaded configuration. Furthermore, the RF transceivers 102, 602 can be tested in parallel which may reduce the time needed to test the RF transceivers 102, 602 during production testing. In one example, a printed circuit board (corresponding to the printed circuit board 502) to which the RF transceivers 102, 602 are detachably coupled may include an RF signal line for transferring the RF signal for LO synchronization from the first RF transceiver 102 to the second RF transceiver 602. In case the RF transceivers 102 and 602 are included in a same semiconductor package, the semiconductor package may include a structure to transfer the RF signal for LO synchronization. In one example, in addition to the LO synchronization, a clock synchronization between the first RF transceiver 102 and the second RF transceiver 602 may be provided by the printed circuit board.

Further referring to Figure 6, each test waveguide structure 104, 604 of the test setup 600 may be embedded inside separate bodies and the connecting hollow waveguide 648 may externally couple the test waveguide structures 104, 604 with each other. Alternatively, both test waveguide structures 104, 604 and the connecting hollow waveguides 648 may be embedded inside a single body i.e., form an integrated test wave guide structure. This allows a much more compact implementation and a better handling of the test setup.

A further splitter 650 may be arranged between the coupler 126 and the output port 122 of the first hollow waveguide 146 inside the first hollow waveguide 146. Similarly, a further combiner 658 may be arranged between the coupler 126 and the output port 122 of the second hollow waveguide 646 inside the second hollow waveguide 646. The connecting hollow waveguide 648 couples the splitter 650 with the combiner 658. In particular, the connecting hollow waveguide 648 couples a first output 652 of the splitter 650 with a first input 660 of the combiner 658. The second output 654 of the splitter 650 is coupled with the output port 122 of the first hollow waveguide 146 via the first hollow waveguide 146. An input 656 of the splitter 650 is coupled with the output 130 of the coupler 126 of the first hollow waveguide 146 via the first hollow waveguide 146. The splitter 650 is configured to split the first portion of the first RF signal from the output 130 of the coupler 126 of the first hollow waveguide 146 into a first portion hereinafter referred to as fourth portion of the first RF signal and a second portion hereinafter referred to as fifth portion of the first RF signal. The fourth portion of the first RF signal is transferred to the test waveguide structure 604 via the connecting hollow waveguide 648. The fifth portion of the first RF signal is transferred wirelessly to the RF transceiver 102 and is analyzed in the receive channel 112 of the RF transceiver 102 as described in one of the test set-ups 100, 200, 300 of Figure 100, 200, 300 respectively.

A second input 662 of the combiner 658 is coupled with an output 130 of the coupler 126 of the second hollow waveguide 646 via the second hollow waveguide 646. The combiner 658 is configured to combine the fourth portion of the first RF signal and a first portion of the second RF signal and forms a combined signal. An output 664 of the combiner 658 is coupled with the output port 122 of the second hollow waveguide 646 via the second hollow waveguide 646. The combined RF signal is wirelessly transferred to the second wireless transfer element 108 of the RF transceiver 602 via the output port 122 of the second hollow waveguide 646.

In some examples the first RF signal and the second RF signal may have different RF frequencies or have RF frequencies in different frequency ranges. The combined RF signal may therefore include the frequencies of the first RF signal and the second RF signal. In some examples, the combined RF signal may have more frequency components than any of the first RF signal and the second RF signal and a range of frequencies may be extended compared to any of the first RF signal and the second RF signal. This allows new testing opportunities as will be described below.

The combined RF signal is transferred to a receive channel 112 of the RF transceiver 602. The processing unit 142 of the receive channel 112 of the RF transceiver 602 has a baseband filter which is configured to allow frequencies in a pre-defined range and block other frequencies. After processing the combined RF signal in the receive channel 112 of the RF transceiver 602 for example by down-converting the combined RF signal, a third test result is obtained. The third test result may comprise values or estimates of the frequencies of the down-converted signal which may be compared against expected values. This may for example provide information whether the RF transceiver 602 is immune to distortion or intermodulation from external RF signals. In case the third test result deviates from the frequency of the exemplary test RF signal, a warning signal may be generated indicating potential problems or potential failures of the RF transceiver 602.

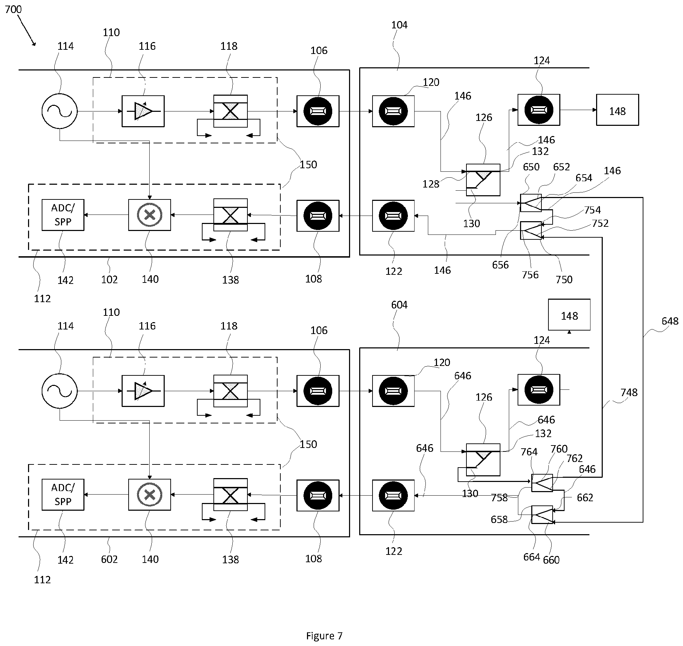

Figure 7 shows a further example of a test setup 700 wherein the test setup 700 may include some or all features of test setup 600 of Figure 6. The test waveguide structures 104 and 604 may be further coupled to each other by a further connecting hollow waveguide 748. In one example, the connecting hollow waveguides 648 and 748 allow a concurrent testing of the transceivers 102 and 602. The testing may be mutual or symmetrical such that the transceiver 102 transmits at the same time the same signals or a same type of signals to the transceiver 602 as the transceiver 602 transmits to the transceiver 102.

Each test waveguide structure 104, 604 of the test setup 700 may be embedded inside separate bodies and the connecting hollow waveguides 646, 746 externally couple the test waveguide structures 104, 604 with each other. Alternatively, both test waveguide structures 104, 604 and the connecting hollow waveguides 646, 746 may be embedded inside a single body i.e., form an integrated test wave guide structure.

A further combiner 750 may be arranged between the splitter 650 and the output port 122 of the first hollow waveguide 146 inside the first hollow waveguide 146. Similarly, a further splitter 758 may be arranged between the coupler 126 of the second hollow waveguide 646 and the combiner 658 of the second hollow waveguide 646 inside the second hollow waveguide 646. The connecting hollow waveguide 748 couples the combiner 750 with the splitter 758. In particular, a first input 752 of the combiner 750 is coupled with a first output 760 of the splitter 758 by the connection hollow waveguide 748. A second input 754 of the combiner 750 is coupled with the second output 654 of the splitter 650. A second output 762 of the splitter 758 is coupled with the second input 662 of the combiner 658. An input 764 of the splitter 758 is coupled with the output 130 of the coupler 126 of the second hollow waveguide 646.

The splitter 758 is configured to split the first portion of the second RF signal into a fourth portion of the second RF signal and a fifth portion of the second RF signal. The fourth portion of the second RF signal is transferred to the test waveguide structure 104 via the connecting hollow waveguide 748, whereas the fifth portion of the second RF signal is transferred to the combiner 658.

The combiner 658 is configured to combine the fourth portion of the first RF signal and the fifth portion of the second RF signal and form a second combined RF signal. The second combined RF signal is transferred to the RF transceiver 602 as described with reference to the test set-up 600 of Figure 6.

The combiner 750 is configured to combine the fifth portion of the first RF signal and the fourth portion of the second RF signal in order to form a first combined RF signal. Further, an output 756 of the combiner 750 is coupled with the output port 122 of the first hollow waveguide 146 via the first hollow waveguide 146. The first combined RF signal is wirelessly transferred to the receive channel 112 of RF transceiver 102 via the second wireless transfer element 108 of the RF transceiver 102.

The first combined RF signal is processed in the receive channel 112 of the RF transceiver 102 for example by down-converting the first combined RF signal to obtain a fourth test result. Similarly, the second combined RF signal is processed in the receive channel 112 of the RF transceiver 602 for example by down-converting the second combined RF signal to obtain a fifth test result.

In one example, the additional features provided by the example of Fig. 7 may be used to test the bandpass filters of both RF transceivers 102, 602 simultaneously. For example, if frequency components of the fourth and fifth test results deviate from an expected frequency, a warning signal may be generated indicating potential problems or potential failures of one or both of the RF transceivers 102 and 602.

The following examples pertain to further aspects of the disclosure:
Example 1 discloses an apparatus for testing a radio frequency (RF) transceiver comprising:
   - a test waveguide structure comprising:
      - a body,
      - a hollow waveguide embedded inside the body, the hollow waveguide formed by metal walls of the body, wherein the hollow waveguide extends through the body for routing the RF signals,
      - wherein the hollow waveguide comprises an input port on a first surface of the body and configured to wireless receive an RF signal from the RF transceiver,
      - wherein the hollow waveguide further comprises an output port on the first surface and configured to transmit at least a portion of the RF signal wireless to the RF transceiver, and
      - a coupler arranged within the body and configured to couple a first portion of the RF signal to the output port and a second portion of the RF signal to a test port.
Example 2 discloses the apparatus according to example 1, wherein the apparatus comprises a power detector integrated in the body and coupled to the test port wherein the power detector is configured to determine a power of the second portion of the RF signal.
Example 3 discloses the apparatus according to example 1 or 2, wherein the test port comprises an external waveguide connector for connecting an external waveguide to the test port.
Example 4 discloses the apparatus according to any of examples 1 to 3, wherein the input port is a first input port and the hollow waveguide comprises a second input port on the first surface, wherein the apparatus further comprises a combiner arranged in the hollow waveguide, wherein the first input port is coupled via the hollow waveguide to a first input of the combiner and the second input port is coupled via the hollow waveguide to a second input of the combiner, wherein the combiner comprises an output coupled via the hollow waveguide to an input of the coupler.
Example 5 discloses the apparatus according to any of examples 1 to 4, wherein the output port is a first output port and the hollow waveguide further comprises a second output port arranged on the first surface, the second output port configured to wireless transfer RF signals to the RF transceiver,
   wherein the apparatus further comprises a splitter arranged in the hollow waveguide, the splitter comprising an input, a first output and a second output,
   wherein an input of the splitter is coupled via the hollow waveguide to an output of the coupler and wherein the first output of the splitter is coupled via the hollow waveguide to the first output port and the second output of the splitter is coupled via the hollow waveguide to the second output port.
Example 6 discloses the apparatus according to example 5, wherein the coupler is configured to couple a third portion of the RF signal to a termination port of the hollow waveguide.
Example 7 discloses the apparatus according to example 6, wherein the termination port comprises a wedge shape.
Example 8 discloses the apparatus according to example 7, wherein the apparatus further comprises a socket arranged between a printed circuit board and the RF transceiver, wherein the socket is configured to detachably attach the RF transceiver to the socket.
Example 9 discloses the apparatus according to any of examples 1 to 8, wherein the body is formed as a single piece.
Example 10 discloses the apparatus according to any preceding examples, wherein the test waveguide structure is a first test waveguide structure, the hollow waveguide is a first hollow waveguide the RF transceiver is a first RF transceiver, the splitter is a first splitter and the combiner is a first combiner and wherein the apparatus is configured to test a second RF transceiver in addition to the first RF transceiver,
   - wherein the first hollow waveguide comprises a second splitter,
   - wherein the apparatus, further comprises a second test waveguide structure comprising a second hollow waveguide and a second combiner inside the second hollow waveguide,
   - wherein a first output of the second splitter is coupled with a first input of the second combiner via a connecting hollow waveguide.
Example 11 discloses the apparatus according to example 10, wherein the RF signal is a first RF signal from the first RF transceiver, and the second RF transceiver transfers a second RF signal,
   - wherein an input of the second splitter is coupled with the output of the coupler of the first hollow waveguide,
   - a second output of the second splitter is coupled with the output port of the first hollow waveguide,
   - wherein a second input of the second combiner is coupled with an output of a coupler of the second hollow waveguide and wherein the second combiner is configured to combine a fourth portion of the first RF signal and a first portion of the second RF signal,
   - wherein an output of the second combiner is coupled with an output port of the second hollow waveguide and is configured to wirelessly transfer the fourth portion of the first RF signal and the first portion of the second RF signal in the second RF transceiver.
Example 12 discloses the apparatus according to example 11, wherein the first hollow waveguide comprises a third combiner arranged between the second splitter and the output port of the first hollow waveguide and the second hollow waveguide comprises a third splitter arranged between the coupler of the second hollow waveguide and the third combiner,
   - wherein a first input of the third combiner is coupled with a first output of the third splitter via a further connecting hollow waveguide, and
   - wherein a second input of the third combiner is coupled with the second output of the second splitter and the third combiner is configured to combine a fifth portion of the first RF signal and a fourth portion of the second RF signal,
   - wherein an output of the third combiner is coupled with the output port of the first hollow waveguide and is configured to transfer the fifth portion of the first RF signal and a fourth portion of the second RF signal in the first RF transceiver,
   - wherein a second output of the third splitter is coupled with the second input of the second combiner,
   - wherein an input of the third splitter is coupled with the output of the coupler of the second hollow waveguide, and
   - wherein the second combiner is configured to transfer the fourth portion of the first RF signal and a fifth portion of the second RF signal and in the second RF transceiver.
Example 13 discloses the apparatus according to example 11 or 12, wherein the second hollow waveguide is embedded inside a body of the second test waveguide structure and wherein the first hollow waveguide is externally coupled with the second hollow waveguide by the connecting waveguide.
Example 14 discloses the apparatus according to example 11 or 12, wherein the second hollow waveguide and the connecting waveguide, are embedded inside the body of the first test waveguide structure.
Example 15 discloses a method of testing an RF transceiver comprising:
   - coupling the RF transceiver to an apparatus for testing an RF transceiver according to any of examples 1 to 9, wireless transferring an RF signal from the RF transceiver to the input port of the hollow waveguide,
   - coupling via the coupler the first portion of the RF signal to the output port of the hollow waveguide,
   - wireless transferring the first portion of the RF signal from the output port of the hollow waveguide to the RF transceiver,
   - processing the first portion of the RF signal in the RF transceiver,
   - and determining a first test result of the testing based on the processing of the first portion of the RF signal in the RF transceiver.
Example 16 discloses the method according to example 15, wherein processing the first portion of the RF signal in the RF transceiver comprises down-converting the first portion of the RF signal in the RF transceiver to generate a down-converted signal,
   processing the down-converted signal in the receive path of the RF transceiver; and determining the first test result based on the processing of the down-converted signal.
Example 17 discloses the method according to example 15 or 16, wherein determining the first test result comprises determining at least one of a phase information of the first portion of the RF signal or a power of the first portion of the RF signal.
Example 18 discloses the method according to example 17, further comprising:
   - coupling the second portion of the RF signal to the test port,
   - measuring at least one of a phase information or a power of the second portion of the RF signal coupled to the test port,
   - determining a second test result based on the measuring.
Example 19 discloses the method according to example 18, further comprising comparing the first test result with the second test result.
Example 20 discloses the method according to example 18, comprising coupling via the coupler the third portion of the RF signal to a termination port of the hollow waveguide.
Example 21 discloses the method according to any of examples 15 to 20, wherein the hollow waveguide comprises a plurality of input ports and a plurality of output ports, wherein coupling the RF transceiver to the apparatus further comprises:
   - coupling each of a plurality of wireless transmission structures of the RF transceiver with a corresponding input port of the plurality of input ports,
   - coupling each of a plurality of wireless receiving structures of the RF transceiver with a corresponding output port of the plurality of output ports, wherein the method further comprises:
   - selecting a respective transmission path from the plurality of transmission paths,
   - activating the selected transmission path and wireless transferring the RF signal from the selected transmission path to the input port,
   - activating the plurality of receiving paths,
   - splitting the first portion of the RF signal such that each output port to the plurality of output ports receives a respective splitted portion of the first portion of the RF signal,
   processing each split portion in a corresponding receiving path of the transceiver.
Example 22 discloses the method according to example 15, comprising:
   - coupling a second RF transceiver to the apparatus for testing the RF transceivers according to example 10 to 13, wirelessly transferring the fourth portion of the first RF signal to the second test waveguide structure,
   - mixing via the combiner a first portion of the second RF signal and the fourth portion of the first RF signal to form a combined RF signal and
   - coupling the combined RF signal to the output port of the second hollow waveguide,
   - wirelessly transferring the combined RF signal from the output port of the second hollow waveguide to the second RF transceiver,
   - processing the combined RF signal in the second RF transceiver,
   - and determining a third test result of the testing based on the processing of the combined RF signal in the second RF transceiver.
Example 23 discloses the method according to example 22, wherein processing the combined RF signal in the second RF transceiver comprises down-converting the mixed RF signal in the second RF transceiver to generate a down-converted signal,
   processing the down-converted signal in a receive channel of the second RF transceiver; and determining the third test result based on the processing of the down-converted signal.
Example 24 discloses the method according to example 22 or 23, wherein determining the third test result comprises determining a frequency information of the down-converted signal.

## Claims

1. An apparatus for testing a radio frequency (RF) transceiver (102, 202) comprising:
- a test waveguide structure (104, 204) comprising:
- a body (402),
- a hollow waveguide (146) embedded inside the body (402), the hollow waveguide (146) formed by metal walls of the body (402), wherein the hollow waveguide (146) extends through the body (402) for routing the RF signals,
- wherein the hollow waveguide (146) comprises an input port (120) on a first surface (404) of the body (402) and configured to wireless receive an RF signal from the RF transceiver (102, 202),
- wherein the hollow waveguide (146) further comprises an output port (122) on the first surface (404) and configured to transmit at least a portion of the RF signal wireless to the RF transceiver (102, 202), and
- a coupler (126) arranged within the body (402) and configured to couple a first portion of the RF signal to the output port (122) and a second portion of the RF signal to a test port (124).

2. The apparatus according to claim 1, wherein the apparatus comprises a power detector integrated in the body (402) and coupled to the test port (124), wherein the power detector is configured to determine a power of the second portion of the RF signal.

3. The apparatus according to claim 1 or 2, wherein the test port (124) comprises an external waveguide connector for connecting an external waveguide to the test port (124).

4. The apparatus according to any of claims 1 to 3, wherein the input port (120) is a first input port (120) and the hollow waveguide (146) comprises a second input port (220) on the first surface (404), wherein the apparatus further comprises a combiner (224) arranged in the hollow waveguide (146), wherein the first input port (120) is coupled via the hollow waveguide (146) to a first input (214) of the combiner (224) and the second input port (220) is coupled via the hollow waveguide (146) to a second input (214) of the combiner (224), wherein the combiner (224) comprises an output (216) coupled via the hollow waveguide (146) to an input (128) of the coupler (126).

5. The apparatus according to any of claims 1 to 4, wherein the output port (122) is a first output port (122) and the hollow waveguide (146) further comprises a second output port (222) arranged on the first surface (404), the second output port (222) is configured to wireless transfer RF signals to the RF transceiver (102, 202),
wherein the apparatus further comprises a splitter (228) arranged in the hollow waveguide (146), the splitter (228) comprising an input (218), a first output (226) and a second output (226),
wherein the input (218) of the splitter (228) is coupled via the hollow waveguide (146) to an output (130) of the coupler (126) and wherein the first output (226) of the splitter (228) is coupled via the hollow waveguide (146) to the first output port (122) and the second output (226) of the splitter (228) is coupled via the hollow waveguide (146) to the second output port (222).

6. The apparatus according to claim 5, wherein the coupler (126) is configured to couple a third portion of the RF signal to an additional port (302) of the hollow waveguide (146).

7. The apparatus according to claim 6, wherein the additional port (302) comprises a wedge shape.

8. The apparatus according to claim 7, wherein the apparatus further comprises a socket (504) arranged between a printed circuit board (502) and the RF transceiver (102, 202), wherein the socket (504) is configured to detachably attach the RF transceiver (102, 202) to the socket (504).

9. The apparatus according to any of claims 1 to 8, wherein the body (402) is formed as a single piece.

10. The apparatus (600, 700) according to any preceding claims, wherein the test waveguide structure (104, 204) is a first test waveguide structure (104, 204), the hollow waveguide (146) is a first hollow waveguide (146) the RF transceiver (102, 202) is a first RF transceiver (102, 202), the splitter (228) is a first splitter (228) and the combiner (224) is a first combiner (224) and wherein the apparatus (600, 700) is configured to test a second RF transceiver (602) in addition to the first RF transceiver (102, 202),
- wherein the first hollow waveguide (146) comprises a second splitter (650),
- wherein the apparatus (600, 700) further comprises a second test waveguide structure (604) comprising a second hollow waveguide (646) and a second combiner (658) inside the second hollow waveguide (646),
- wherein a first output (652) of the second splitter (650) is coupled with a first input (660) of the second combiner (658) via a connecting hollow waveguide (648).

11. The apparatus (600, 700) according to claim 10, wherein the RF signal is a first RF signal from the first RF transceiver (102, 202) and the second RF transceiver (602) transfers a second RF signal,
- wherein an input (656) of the second splitter (650) is coupled with the output (130) of the coupler (126) of the first hollow waveguide (146),
- a second output (654) of the second splitter (650) is coupled with the output port (122) of the first hollow waveguide (146),
- wherein a second input (662) of the second combiner (658) is coupled with an output (630) of a coupler (226) of the second hollow waveguide (646) and wherein the second combiner (658) is configured to combine a fourth portion of the first RF signal and a first portion of the second RF signal,
- wherein an output (664) of the second combiner (658) is coupled with an output port (622) of the second hollow waveguide (646) and is configured to wirelessly transfer the fourth portion of the first RF signal and the first portion of the second RF signal in the second RF transceiver (602).

12. The apparatus (700) according to claim 11, wherein the first hollow waveguide (146) comprises a third combiner (750) arranged between the second splitter (650) and the output port (122) of the first hollow waveguide (146) and the second hollow waveguide (646) comprises a third splitter (758) arranged between the coupler (226) of the second hollow waveguide (646) and the third combiner (750),
- wherein a first input (752) of the third combiner (750) is coupled with a first output (760) of the third splitter (758) via a further connecting hollow waveguide (748), and
- wherein a second input (754) of the third combiner (750) is coupled with the second output (654) of the second splitter (650) and the third combiner (750) is configured to combine a fifth portion of the first RF signal and a fourth portion of the second RF signal,
- wherein an output (756) of the third combiner (750) is coupled with the output port (122) of the first hollow waveguide (146) and is configured to transfer the fifth portion of the first RF signal and a fourth portion of the second RF signal in the first RF transceiver (102, 202),
- wherein a second output (762) of the third splitter (758) is coupled with the second input (662) of the second combiner (658),
- wherein an input (764) of the third splitter (758) is coupled with the output (630) of the coupler (126) of the second hollow waveguide (646), and
- wherein the second combiner (658) is configured to transfer the fourth portion of the first RF signal and a fifth portion of the second RF signal and in the second RF transceiver (602).

13. The apparatus according to claim 11 or 12, wherein the second hollow waveguide (604) is embedded inside a body of the second test waveguide structure and wherein the first hollow waveguide (146) is externally coupled with the second hollow waveguide (646) by the connecting waveguide (648).

14. The apparatus according to claim 11 or 12, wherein the second hollow waveguide (646) and the connecting waveguide (648, 748) are embedded inside the body (402) of the first test waveguide structure (104, 204).

15. A method of testing an RF transceiver (102, 202) comprising:
- coupling the RF transceiver (102, 202) to an apparatus for testing an RF transceiver (102, 202) according to any of claims 1 to 9, wireless transferring an RF signal from the RF transceiver (102, 202) to the input port (120) of the hollow waveguide (146),
- coupling via the coupler (126) the first portion of the RF signal to the output port (122) of the hollow waveguide (146),
- wireless transferring the first portion of the RF signal from the output port (122) of the hollow waveguide (146) to the RF transceiver (102, 202),
- processing the first portion of the RF signal in the RF transceiver (102, 202),
- and determining a first test result of the testing based on the processing of the first portion of the RF signal in the RF transceiver (102, 202).

16. The method according to claim 15, wherein processing the first portion of the RF signal in the RF transceiver (102, 202) comprises down-converting the first portion of the RF signal in the RF transceiver (102, 202) to generate a down-converted signal,
processing the down-converted signal in a receive channel (112) of the RF transceiver (102, 202); and determining the first test result based on the processing of the down-converted signal.

17. The method according to claim 15 or 16, wherein determining the first test result comprises determining at least one of a phase information of the first portion of the RF signal or a power of the first portion of the RF signal.

18. The method according to claim 17, further comprising coupling the second portion of the RF signal to the test port (124),
- measuring at least one of a phase information or a power of the second portion of the RF signal coupled to the test port (124),
- determining a second test result based on the measuring.

19. The method according to claim 18, further comprising comparing the first test result with the second test result.

20. The method according to claim 18, comprising coupling via the coupler (126) the third portion of the RF signal to an additional port (302) of the hollow waveguide (146).

21. The method according to any of claims 15 to 20, wherein the hollow waveguide (146) comprises a plurality of input ports (120, 220) and a plurality of output ports (122, 222), wherein coupling the RF transceiver (202) to the apparatus further comprises:
- coupling each of a plurality of wireless transmission structures (106, 206) of the RF transceiver (202) with a corresponding input port of the plurality of input ports (120, 220),
- coupling each of a plurality of wireless receiving structures (108, 208) of the RF transceiver (202) with a corresponding output port of the plurality of output ports (122, 222),
wherein the method further comprises:
- selecting a respective transmission path from a plurality of transmission paths (110, 210),
- activating the selected transmission path and wireless transferring the RF signal from the selected transmission path to the input port (120, 220),
- activating a plurality of receiving paths (112, 212),
- splitting the first portion of the RF signal such that each output port to the plurality of output ports (122, 222) receives a respective splitted portion of the first portion of the RF signal,
- processing each splitted portion in a corresponding receiving path of the RF transceiver (202).

22. The method according to claim 15, comprising:
- coupling a second RF transceiver (602) to the apparatus for testing the RF transceivers (102, 202, 602) according to claim 10 to 13, wirelessly transferring the fourth portion of the first RF signal to the second test waveguide structure (604),
- mixing via the combiner (658) a first portion of the second RF signal and the fourth portion of the first RF signal to form a combined RF signal and
- coupling the combined RF signal to the output port (622) of the second hollow waveguide (646),
- wirelessly transferring the combined RF signal from the output port (622) of the second hollow waveguide (646) to the second RF transceiver (604),
- processing the combined RF signal in the second RF transceiver (602),
- and determining a third test result of the testing based on the processing of the combined RF signal in the second RF transceiver (602).

23. The method according to claim 22, wherein processing the combined RF signal in the second RF transceiver (602) comprises down-converting the mixed RF signal in the second RF transceiver (602) to generate a down-converted signal,
processing the down-converted signal in a receive channel (112) of the second RF transceiver (604); and determining the third test result based on the processing of the down-converted signal.

24. The method according to claim 22 or 23, wherein determining the third test result comprises determining a frequency information of the down-converted signal.
